# EUROPÄISCHE PATENTSCHRIFT

(11) **EP 2 578 076 B1**
(45) Veröffentlichungstag und Bekanntmachung des Hinweises auf die Patenterteilung: **23.09.2015**
(21) Anmeldenummer: 12187212.1
(22) Anmeldetag: 04.10.2012
(51) Int. Cl.: A01G 13/02

(54) **Einbauvorrichtung für das Erdreich im Bereich von Pflanzen und Verfahren zur Einbringung einer derartigen Vorrichtung**
Installation device for the soil in the vicinity of plants and method for handling such a device
Dispositif d'installation pour la terre à proximité de plantes et procédé de mise en place d'un tel dispositif

(30) Priorität: 05.10.2011 DE 102011084022
(43) Veröffentlichungstag der Anmeldung: 10.04.2013
(73) Patentinhaber: Hewitech GmbH & Co. KG, 48607 Ochtrup (DE)
(72) Erfinder: Dirkskötter, Frank, 48607 Ochtrup (DE)
(74) Vertreter: Von Kreisler Selting Werner - Partnerschaft von Patentanwälten und Rechtsanwälten mbB

(56) Entgegenhaltungen:
- EP-A1- 1 607 535
- WO-A1-2007/118894
- DE-C1- 10 143 985
- DE-U1- 29 614 261
- US-A1- 2008 063 935

## Beschreibung

Die Erfindung betrifft eine Einbauvorrichtung für das Erdreich im Bereich von und insbesondere um Pflanzen, wie beispielsweise Bäume, Büsche oder Sträucher. Ferner betrifft die Erfindung ein Verfahren zum Einbringen eines derartigen Einbaus ins Erdreich um eine Pflanze herum bzw. unter Freihaltung eines für die Bepflanzung vorgesehenen Bereichs.

Zur Verschönerung und Begrünung von bebauten Flächen, wie beispielsweise Parkplätzen, öffentlichen Plätzen, Wegen und Straßen ist es bekannt, Bäume, Sträucher, Büsche oder dergleichen Pflanzen zu setzen. Problematisch dabei ist, dass im Laufe der Zeit mit größer werdenden Pflanzen deren Wurzeln zu Beschädigungen der an die Pflanzen angrenzenden Bereiche der bebauten Flächen führen kann. Am häufigsten kommt es hier zu Anhebungen und Verwerfungen der bebauten Bereiche um die Pflanzen herum und zwar aufgrund der Wurzelbildung, die Pflastersteine, Platten oder auch Straßenbeläge anheben können. Aus diesem Grund werden um Pflanzungen der zuvor genannten Art herum Freiflächen belassen (sogenannte Baumscheiben), die allerdings im Laufe der Zeit unansehnlich werden und landschaftsgärtnerisch gepflegt werden müssen. Außerdem verringern derartige Freiflächen den nutzbaren Anteil der bebauten bzw. gepflasterten oder mit Platten versehenen Straßenflächen.

Aus DE-U-29 614261 ist ein Wurzelschutzcontainer aus z. B. Beton bekannt, der im Bereich von (Gebäude-)Wänden odgl. Baukörpern positioniert werden kann, so dass die Wurzeln der in den Container wachsenden Pflanzen die Wand nicht angreifen können. EP-A-1 607 535 offenbart eine Einbauvorrichtung für das Erdreich im Bereich von Pflanzen gemäß dem Oberbegriff des Anspruchs 1.

Aufgabe der Erfindung ist es, hinsichtlich der zuvor genannten Nachteile Abhilfe zu schaffen.

Zur Lösung dieser Aufgabe wird mit der Erfindung eine Einbauvorrichtung für das Erdreich im Bereich von Pflanzen, insbesondere Bäumen, Büschen oder Sträuchern, vorgeschlagen, wobei die Einbauvorrichtung versehen ist mit
- einem Einbauhohlkörper, der eine Bodenwand sowie von dieser aufragende Seitenwände mit der Bodenwand abgewandten oberen Rändern und einen Deckel aufweist,
- wobei zumindest einige der Seitenwände jeweils eine Öffnung aufweisen und/oder in anderer Weise perforiert sind und
- wobei der Deckel von oben auf die der Bodenwand abgewandten oberen Ränder der Seitenwände aufsetzbar ist.

Desweiteren wird zur Lösung der zuvor genannten Aufgabe mit der Erfindung ein Verfahren zur Einbringung einer Einbauvorrichtung nach einem der voran genannten Schritte ins Erdreich um eine Pflanze, insbesondere einen Baum, Busch oder Strauch herum oder unter Freihaltung eines Bereichs für eine Pflanze vorgeschlagen, wobei bei dem Verfahren
- mehrere Einbauhohlkörper ohne ihre Deckel ins Erdreich eingebracht bzw. im Erdreich positionierte werden,
- die Einbauhohlkörper mit Füllgut unter Freihaltung einer oberen Schicht aufgefüllt werden und
- die Einbauhohlkörper nach der teilweisen Verfüllung oder jeder Einbauhohlkörper nach seiner teilweisen Verfüllung mittels der Deckel bzw. mittels seines Deckels nach oben hin abgeschlossen werden/wird.

Das Wesensmerkmal der Erfindung ist darin zu sehen, dass der Deckel des Einbauhohlkörpers sich auf dessen Seitenwände aufsetzen lässt, nachdem diese zusammen mit der Bodenwand, mit der sie verbunden sind, ins Erdreich eingebracht bzw. positioniert sind. Der Einbauhohlkörper kann nach Art einer Gitterbox ausgebildet sein und weist Perforierungen auf. Derartige Einbauhohlkörper werden bisher auch als Entwässerungsboxen ins Erdreich eingesetzt. Es ist aber auch möglich, dass die Boden- und Seitenwände sowie der Deckel des Einbauhohlkörpers als überwiegend geschlossene Flächen ausgebildet sind, wobei zum Hindurchtreten von Wurzeln der Pflanzen, in deren Bereich der erfindungsgemäße Einbau positioniert wird, Öffnungen in den Seitenwänden vorhanden sind. Durch diese Öffnungen können die Wurzeln "geführt" werden bzw. breiten sich die Wurzeln "geführt" im Erdreich aus. Der Vorteil des nachträglichen Aufsetzens des Deckels auf den Einbauhohlkörper, und zwar dann, wenn dieser bis auf seinen Deckel bereits im Erdreich verbaut ist, ist darin zu sehen, dass sich nunmehr der Einbauhohlkörper verfüllen lässt, bevor er nach oben hin durch den Deckel abgeschlossen wird. Dabei kann der Verfüllungsgrad derart gewählt sein, dass sich in dem Einbauhohlkörper zum Deckel hin ein Freiraum bildet, also im einfachsten Fall Luft existiert. Werden die so teilverfüllten Einbauhohlkörper als oberste Lage eines Einbaus verwendet, wird der Vorteil erreicht, dass die Wurzeln innerhalb der Einbauhohlkörper nicht in Richtung zu deren Deckeln hin wachsen. Denn die Wurzeln von Pflanzen breiten sich allenfalls an der Oberfläche (d.h. an der Grenzschicht zur Luft) aus, wachsen aber in jedem Fall nicht aus der Oberfläche heraus. Dies gilt zumindest für die meisten Bäume, Büsche, Sträucher oder andere Pflanzen in den urbanisierten Breitengraden der Erde.

Die Öffnungen in den Wänden des Einbauhohlkörpers können unterschiedlich groß sein. Pro Wand (Seitenwände, Bodenwand, Deckel) ist eine Öffnung vorgesehen, und zwar unabhängig von einer möglicherweise vorgesehenen Gitterstruktur der betreffenden Wand. Wenn mehrere Öffnungen an dem Einbauhohlkörper vorgesehen sind, so können beispielsweise zwei gegenüberliegende Öffnungen relativ großflächig sein und sich mindestens über 40% bzw. mindestens über 50% und mehr der betreffenden Wandflächengröße erstrecken. Andere Öffnungen, die in dem Einbauhohlkörper an einer seiner Wände ausgebildet sein können, können dagegen lediglich ca. 10 bis 20% der betreffenden Wandfläche umfassen.

Das Aufsetzen des Deckels auf die oberen Ränder der Seitenwände erfolgt zweckmäßigerweise in einer Form, so dass sich der Deckel anschließend nicht unbeabsichtigt wieder lösen kann. Hier bieten sich Zapfen-Loch-Verbindungen an, wobei die Achsen der Löcher und Zapfen in Aufsetzrichtung des Deckels ausgerichtet sind.

Zweckmäßigerweise sind die Einbauhohlkörper derart konzipiert und konstruiert, dass sie Belastungen standhalten, wie sie beim Überfahren von gepflasterten Flächen durch Fahrzeuge, wie beispielsweise in Straßen und auf Parkplätzen auftreten. Alternativ ist es selbstverständlich möglich, die Boxen traglastfähig auszustatten, womit sich diese Boxen bzw. Einbauhohlkörper zum Einbau im Erdreich unterhalb von gepflasterten Gehwegen oder dergleichen eignen.

Zweckmäßigerweise werden mehrere der zuvor genannten Einbauhohlkörper nebeneinander um einen Bereich bzw. Raum im Erdreich herum angeordnet. Bei würfel- bzw. quaderförmigen Einbauhohlkörpern lässt sich auf diese Art und Weise ein rechteckiger Ring oder Umrahmung aus Einbauhohlkörpern ins Erdreich einbringen. Der von diesem Ring eingeschlossene Bereich dient der Bepflanzung und der Ausbreitung der Wurzeln der Bepflanzung. Die oberste Lage der Einbauhohlkörper wird, wie oben erwähnt, teilweise verfüllt, so dass ein Freiraum zu den Deckeln hin entsteht. Die unteren Einbauhohlkörper können gänzlich gefüllt oder frei bleiben. Dies ist anwendungsabhängig vor Ort zu entscheiden.

Weitere vorteilhafte Ausgestaltungen des erfindungsgemäßen Einbaus und des erfindungsgemäßen Verfahrens sind in den Unteransprüchen angegebenen.

Anhand der Zeichnung wird nachfolgend auf ein Ausführungsbeispiel der Erfindung näher eingegangen. Im Einzelnen zeigen dabei:
- Fig. 1: eine perspektivische Ansicht eines Einbauhohlkörpers,
- Fig. 2: eine perspektivische Ansicht des Einbauhohlkörpers gemäß Fig. 1 in Explosionsdarstellung und mit teilweise freigeschnittenen Bereichen,
- Fig. 3: eine Seitenansicht auf den Einbauhohlkörper gemäß Fign. 1 und 2 in Richtung auf den in diesem Ausführungsbeispiel von dem Einbauhohlkörper definierten Durchgangskanal zur Verdeutlichung der erfindungsgemäßen Zusammensteckbarkeit des Deckels mit den Seitenwänden des Einbauhohlkörpers und der Seitenwände mit dem Boden des Einbauhohlkörpers,
- Fig. 4: schematisch und in Draufsicht (sowie ohne Erdreich) die Einbausituation bei Anordnung mehrerer Einbauhohlkörper um einen Pflanzbereich für einen Baum herum und
- Fig. 5: einen Schnitt entlang der Ebene V/V der Fig. 4.

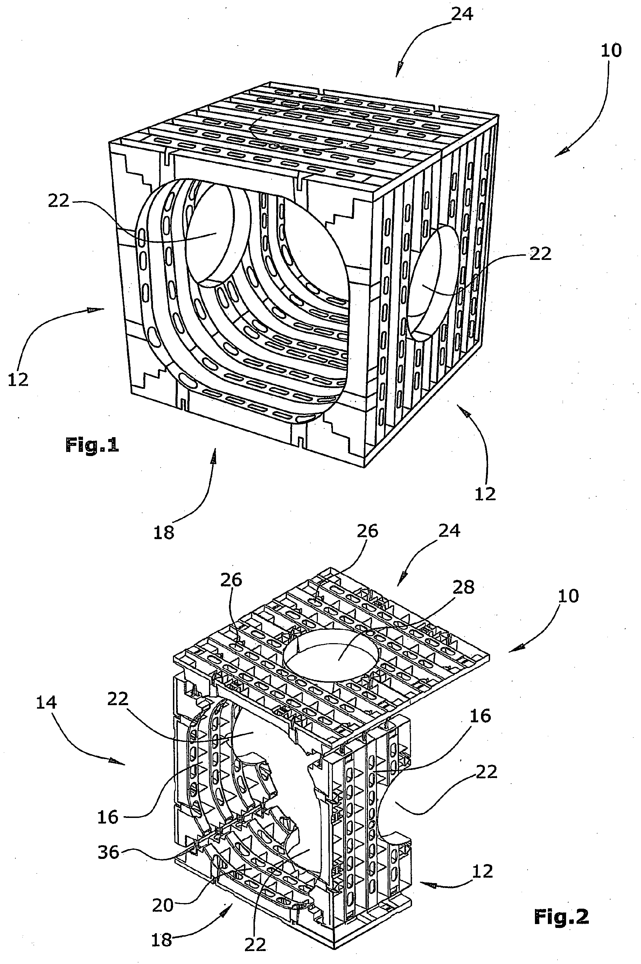

Fig. 1 zeigt perspektivisch ein Ausführungsbeispiel für einen Einbauhohlkörper 10, der in diesem Fall ähnlich einer Drainage- bzw. Entwässerungsbox ausgebildet ist, wie sie an sich zum Stand der Technik gehört. Allerdings weist der Einbauhohlkörper 10 spezielle Besonderheiten auf, auf die nachfolgend eingegangen wird.

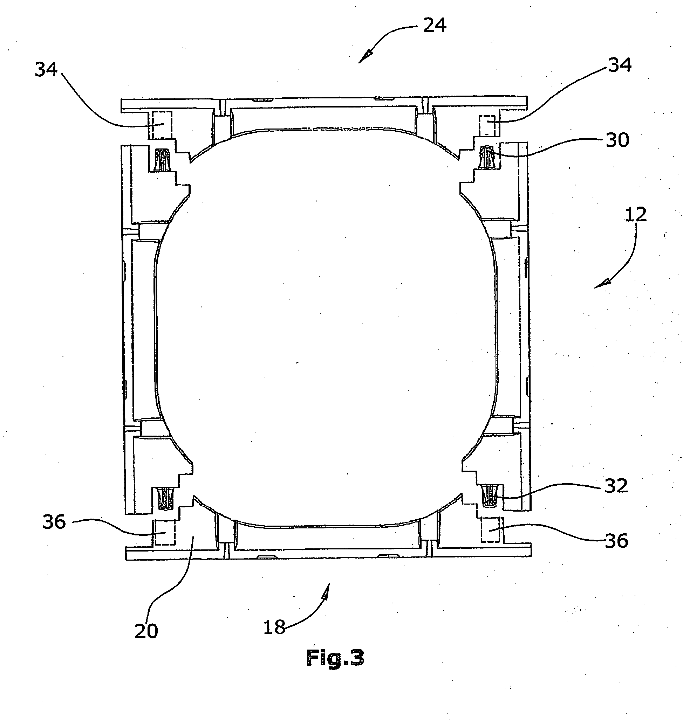

Eine weitere Darstellung des Einbauhohlkörpers 10 gemäß Fig. 1 ist in den Fign. 2 und 3 gezeigt. So weist der Einbauhohlkörper 10 zwei gegenüber-liegende Seitenwände 12, 14 auf, die in diesem Ausführungsbeispiel jeweils aus zwei gleichen Wandhälften 16 bestehen aber auch einstückig gefertigt sein können. Die Grundstruktur der Seitenwände 12 ist eine Gitterstruktur mit Verstrebungen und Öffnungen, die der Stabilität und Traglastfähigkeit der Seitenwände 12, 14 dient. Auch die Bodenwand 18 des Einbauhohlkörpers 10 weist eine Gitterstruktur auf und umfasst ebenfalls zwei identische Bodenwandteile 20 kann aber auch einteilig gefertigt sein. Wie zu erkennen ist, bilden die jeweiligen beiden Teile der Seiten- und Bodenwände 12, 14, 18 Durchgangsöffnungen 22, die für den Durchtritt einer Wurzel (beispielsweise eines Baums) vorgesehen sind. Der Einbauhohlkörper 10 ist darüber hinaus mit einem Deckel 24 versehen, der ebenfalls zweiteilig ausgebildet ist und die beiden Deckel-Halbteile 26 aufweist, die wiederum miteinander eine Öffnung 28 bilden. Es sei an dieser Stelle hervorgehoben, dass die Bodenwand 18 und der Deckel 24 nicht notwendigerweise eine Durchgangsöffnung aufweisen müssen. Im Regelfall sind diese Teile des Einbauhohlkörpers 10 sowie die Seitenwände 12, 14 perforiert, so wie es durch die hier dargestellte Gitterstruktur gegeben ist. Anhand von Fig. 3 ist zu erkennen, dass die Seitenwände 12 in deren Ebenen sich erstreckende, nach oben und nach unten abstehende Verbindungszapfen 30, 32 aufweisen, die in entsprechende Öffnungen bzw. Löcher 34, 36 der Bodenwand 18 bzw. des Deckels 24 eintauchen. Durch diese Konstruktion ist es möglich, den Einbauhohlkörper 10 ohne Deckel 24 und bei mit der Bodenwand 18 zusammengesteckten Seitenwänden 12 in das Erdreich einzubringen, um dann in dieser Einbringposition des Einbauhohlkörpers 10 dessen Deckel 24 aufzusetzen. Dies ist insoweit von Vorteil, als nun der Einbauhohlkörper 10 verfüllt werden kann und zwar entweder vollständig oder unter Freihaltung eines oberen Bereichs, um alsdann erst den Deckel 24 aufzusetzen.

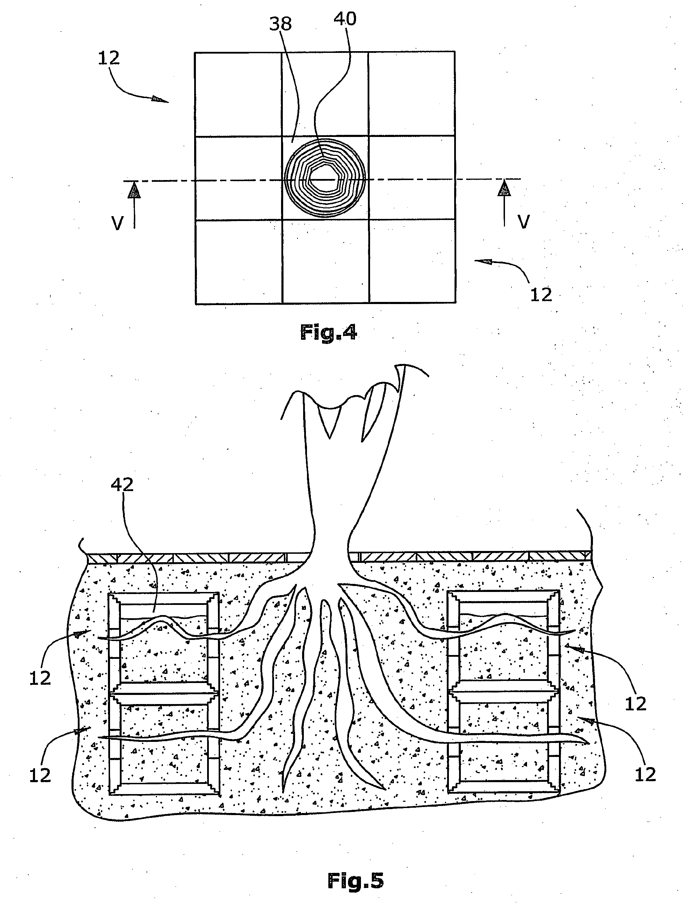

Die Fign. 4 und 5 zeigen eine Einbauanordnung, bei der zwei Lagen von in diesem Ausführungsbeispiel jeweils neun Einbauhohlkörpern 10 übereinander um einen zentralen Bereich 38 herum angeordnet sind. Wie anhand von Fig. 4 zu erkennen ist, sind die neun Einbauhohlkörper 10 nach Art eines rechteckigen Rahmens um den zentralen Bereich 38 angeordnet. Fig. 5 zeigt, dass die unteren Einbauhohlkörper 10 vollständig verfüllt sind, während die Einbauhohlkörper 10 der oberen Lage nur teilweise verfüllt sind (beispielsweise bis zu einer Höhe von 80% bis 90%). Zur Verfüllung der Einbauhohlkörper 10 dient beispielsweise Erdreich oder Granulat oder ein anderes Füllgut, das die Wurzelausbreitung und das Wachstum der Pflanze (in diesem Ausführungsbeispiel des Baums 40) ermöglicht bzw. nicht behindert. Zu erkennen ist ferner, wie erreicht wird, dass die Wurzeln nicht "nach oben" wachsen. Denn durch die Luftschicht bzw. den Freiraum 42 in den Einbauhohlkörpern 10 der oberen Lage wird ein Wurzelwachstum nach "oben" verhindert. Damit heben sich also im Laufe der Zeit die Oberbauten, wie beispielsweise Pflastersteine, oder Straßenbeläge, die im Bereich des Baums 40 oberhalb der Anordnung der Einbauhohlkörper 10 vorhanden sind, infolge des Wurzelwachstums und der Wurzelausbreitung nicht an. In diesem Ausführungsbeispiel wird der Oberbau von Gehweg- oder befahrbaren Pflastersteinen oder Platten 44 oder dergleichen gebildet. Diese Platten 44 können mit dem jeweils anwendungsspezifischen und damit erforderlichen Unterbau versehen sein, was in Fig. 5 im Einzelnen nicht dargestellt ist.

## Patentansprüche

1. Einbauvorrichtung für das Erdreich im Bereich von Pflanzen, insbesondere Bäumen, Büschen oder Sträuchern, mit
- einem Einbauhohlkörper (10), der eine Bodenwand (18) sowie von dieser aufragende Seitenwände (12,14) mit der Bodenwand (18) abgewandten oberen Rändern aufweist,
- wobei zumindest einige der Seitenwände (12,14) jeweils eine Öffnung (22) aufweisen und/oder in anderer Weise perforiert sind,
**dadurch gekennzeichnet dass** der Einbauhohlkörper einen Deckel (24) aufweist, der von oben auf die der Bodenwand (18) abgewandten oberen Ränder der Seitenwände (12,14) aufsetzbar ist.

2. Einbauvorrichtung nach Anspruch 1, **dadurch gekennzeichnet, dass** die Seitenwände (12,14) und die Bodenwand (18) insbesondere unverlierbar zusammensteckbar sind und dass der Deckel (24) mit den oberen Rändern der Seitenwände (12,14) unverlierbar verbindbar ist.

3. Einbauvorrichtung nach Anspruch 1 oder 2, **dadurch gekennzeichnet, dass** der Einbauhohlkörper (10) unter Freihalten eines Abstandes zu den oberen Rändern der Seitenwände (12,14) mit einem Füllgut wie z.B. Erdreich oder Granulat befüllt ist bzw. befüllbar ist.

4. Einbauvorrichtung nach einem der Ansprüche 1 bis 3, **dadurch gekennzeichnet, dass** der Einbauhohlkörper (10) zwei Seitenwände (12,14) aufweist und damit ohne Deckel (24) im Querschnitt durch die Seitenwände (12,14) und die Bodenwand (18) betrachtet im Wesentlichen U-förmig ausgebildet ist und dass der Deckel (24) nach dem Einbau des Einbauhohlkörpers (10) ins Erdreich auf die Seitenwände (12,14) aufsetzbar ist.

5. Einbauvorrichtung nach einem der Ansprüche 1 bis 4, **dadurch gekennzeichnet, dass** mehrere Einbauhohlkörper (10) im Erdreich nach Art einer Umrahmung und damit und Freihaltung eines von der Umrahmung umgebenden Bereichs (38) für eine Pflanze positionierbar sind.

6. Einbauvorrichtung nach einem der Ansprüche 1 bis 5, **dadurch gekennzeichnet, dass** um den Einbauhohlkörper (10) bzw. um eine Anordnung von neben- und/oder aufeinander positionierten Einbauhohlkörpern (10) eine Vliesmaterialschicht aus z.B. Kunststofffasern angeordnet ist.

7. Einbauvorrichtung nach einem der Ansprüche 1 bis 6, **dadurch gekennzeichnet, dass** die Boden- und/oder Seitenwände (12,14) und/oder der Deckel (24) eine Gitterstruktur aufweist/aufweisen.

8. Verfahren zur Einbringung einer Einbauvorrichtung nach einem der vorhergehenden Ansprüche ins Erdreich um eine Pflanze, insbesondere einen Baum, Busch oder Strauch herum oder unter Freihaltung eines Bereichs für eine Pflanze, wobei bei dem Verfahren
- mehrere Einbauhohlkörper (10) ohne ihre Deckel (24) ins Erdreich eingebracht werden,
- die Einbauhohlkörper (10) mit Füllgut unter Freihaltung einer oberen Schicht aufgefüllt werden und
- die Einbauhohlkörper (10) nach der teilweisen Verfüllung oder jeder Einbauhohlkörper (10) nach seiner teilweisen Verfüllung mittels der Deckel (24) bzw. mittels seines Deckels (24) nach oben hin abgeschlossen werden/wird.

9. Verfahren nach Anspruch 8, **dadurch gekennzeichnet, dass** auf die Deckel (24) der Einbauhohlkörper (10) Erdreich oder anderes Material, Pflastersteine, Platten oder ein Straßenbelag, ggf. mit dafür erforderlichem Untergrund, aufgebracht wird.

10. Verfahren nach Anspruch 8 oder 9, **dadurch gekennzeichnet, dass** mehrere Einbauhohlkörper (10) im Erdreich übereinander angeordnet werden, wobei die Einbauhohlkörper (10) der unteren Lage oder Lagen vorzugsweise vollständig verfüllt werden und anschließend ihre Deckel (24) aufgesetzt werden und dass die Einbauhohlkörper (10) der obersten Lage teilweise verfüllt und anschließend ihre Deckel (24) aufgesetzt werden.

## Claims

1. An installation device for the soil in the vicinity of plants, particularly trees, bushes and shrubs, comprising
- a hollow installation body (10) comprising a bottom wall (18) and side walls (12,14) extending therefrom, said side walls (12,14) having upper edges facing away from the bottom wall (18),
- at least some of the side walls (12,14) having a respective opening (22) and/or being perforated in another manner,
**characterized in that** the hollow installation body comprises a cover (24) which can be mounted from above onto the upper edges of the side walls (12,14) facing away from the bottom wall (18).

2. The installation device according to claim 1, **characterized in that** the side walls (12,14) and the bottom wall (18) can be assembled with each other particularly undetachably and that the cover (24) can be undetachably connected to the upper edges of the side walls (12,14).

3. The installation device according to claim 1 or 2, **characterized in that** the hollow installation body (10) is filled and respectively fillable by a filling material such as e.g. soil or granulate while leaving a distance to the upper edges of the side walls (12,14).

4. The installation device according to any one of claims 1 to 3, **characterized in that** the hollow installation body (10) comprises two side walls (12,14) and thus, without the cover (24), when viewed in cross section through the space between the side walls (12,14) and the bottom wall (18), is substantially U-shaped, and that the cover (24) can be mounted onto the side walls (12,14) after installation of the hollow installation body (10) in the soil.

5. The installation device according to any one of claims 1 to 4, **characterized in that** a plurality of hollow installation bodies (10) can be positioned in the soil in the manner of an enclosure and, thus, can leave an area (38) for a plant that is surrounded by the enclosure.

6. The installation device according to any one of claims 1 to 5, **characterized in that** a layer of nonwoven material, e.g. of plastic fibers, is arranged around the hollow installation body (10) and respectively around an array of hollow installation bodies (10) positioned adjacent to each other and/or on top of each other.

7. Installation device according to any one of claims 1 to 6, **characterized in that** the bottom and/or side walls (12,14) and/or the cover (24) comprise a grid structure.

8. A method for placing an installation device according to any one of the preceding claims in the soil around a plant, particularly around a tree, bush or shrub, or while leaving a space for a plant, wherein, in said method,
- a plurality of hollow installation bodies (10) are placed in the soil without their covers (24),
- the hollow installation bodies (10) are filled with filling material while leaving free an upper layer, and
- the hollow installation bodies (10) after they have been partially filled, or each hollow installation body (10) after it has been partially filled, are/is closed toward the top by their covers (24) and respectively its cover (24).

9. The method according to claim 8, **characterized in that** soil or other material, cobblestones, plates or a paving material, optionally together with a base layer required therefor, is applied onto the covers (24) of the hollow installation bodies (10).

10. The method according to claim 8 or 9, **characterized in that** a plurality of hollow installation bodies (10) are arranged above each other in the soil, wherein the hollow installation bodies (10) of the lower layer or layers are preferably filled entirely and their covers (24) are then mounted, and that the hollow installation bodies (10) of the uppermost layer are partially filled and their covers (24) are then mounted.

## Revendications

1. Dispositif de plantation pour la terre dans le domaine des plantes, en particulier des arbres, arbrisseaux et arbustes, comprenant
- un corps creux de plantation (10) qui présente une paroi de fond (18) ainsi que des parois latérales (12, 14) qui s'élèvent sur celle-ci et présentent des bords supérieurs distants de la paroi de fond (18),
- au moins certaines des parois latérales (12, 14) présentant une ouverture (22) et/ou étant perforées d'une autre façon,
**caractérisé en ce que** le corps creux de plantation présente un couvercle (24) qui peut être posé de haut en bas sur les bords supérieurs, distants de la paroi de fond (18), des parois latérales (12, 14).

2. Dispositif de plantation selon la revendication 1, **caractérisé en ce que** les parois latérales (12, 14) et la paroi de fond (18) peuvent être assemblés par emboîtement, en particulier de façon imperdable, et **en ce que** le couvercle (24) peut être assemblé aux bords supérieurs des parois latérales (12, 14) de façon imperdable.

3. Dispositif de plantation selon la revendication 1 ou 2, **caractérisé en ce que** le corps creux de plantation (10) est rempli ou peut être rempli d'une matière de remplissage comme, par exemple de la terre ou du granulé, en ménageant un espace par rapport aux bords supérieurs des parois latérales (12, 14).

4. Dispositif de plantation selon l'une des revendications 1 à 3, **caractérisé en ce que** le corps creux de plantation (10) présente deux parois latérales (12, 14) et que, sans son couvercle (24), il est donc sensiblement en forme de U, vu dans une coupe transversale en travers des parois latérales (12, 14) et de la paroi de fond (18), et **en ce que** le couvercle (24) peut être posé sur les parois latérales (12, 14) après la mise en place du corps creux de plantation (10) dans la terre.

5. Dispositif de plantation selon l'une des revendications 1 à 4, **caractérisé en ce que** plusieurs corps creux de plantation (10) peuvent être positionnés dans la terre à la façon d'un encadrement et donc en ménageant une zone (38) entourée par l'encadrement et destinée à une plante.

6. Dispositif de plantation selon l'une des revendications 1 à 5, **caractérisé en ce qu'**une couche de matière non-tissée, par exemple faite de fibres de matière plastique, est disposée autour du corps creux de plantation (10) ou d'un groupement de corps creux de plantation (10) positionnés les uns à côté et/ou au-dessus des autres.

7. Dispositif de plantation selon l'une des revendications 1 à 6, **caractérisé en ce que** les parois de fond et/ou latérales (12, 14) et/ou le couvercle (24) présente(nt) une structure de grille.

8. Procédé pour mettre en place un dispositif de plantation selon l'une des revendications précédentes dans la terre, autour d'une plante, en particulier autour d'un arbre, d'un arbrisseau ou d'un arbuste, ou en ménageant une zone libre pour une plante, dans lequel procédé
- plusieurs corps creux de plantation (10), sans leur couvercle (24), sont mis en place dans la terre,
- les corps creux de plantation (10) sont remplis d'une matière de remplissage en laissant une couche supérieure libre, et
- les corps creux de plantation (10), après leur remplissage partiel, ou chaque corps creux de plantation (10) après son remplissage partiel, est ou sont fermé(s) vers le haut au moyen des couvercles (24) ou au moyen de son couvercle (24).

9. Procédé selon la revendication 8, **caractérisé en ce que** de la terre ou une autre matière, des pavés, des plaques ou un revêtement de chaussée, éventuellement avec l'infrastructure nécessaire, est ou sont posée(s) sur les couvercles (24) des corps creux de plantation (10).

10. Procédé selon la revendication 8 ou 9, **caractérisé en ce que** plusieurs corps creux de plantation (10) sont disposés l'un au-dessus de l'autre dans la terre, les corps creux de plantation (10) de la couche inférieure ou des couches inférieures étant de préférence entièrement remplis, et leurs couvercles (24) étant ensuite posés, et **en ce que** les corps creux de plantation (10) de la couche la plus supérieure sont partiellement remplis, puis leurs couvercles (24) posés.
